# EUROPÄISCHE PATENTSCHRIFT

(11) **EP 2 116 460 B1**
(45) Veröffentlichungstag und Bekanntmachung des Hinweises auf die Patenterteilung: **27.06.2012**
(21) Anmeldenummer: 08103905.9
(22) Anmeldetag: 09.05.2008
(51) Int. Cl.: B62D 27/06, B62D 33/04

(54) **Kofferaufbau mit einem zwei Verbindungshälften aufweisenden Verbindungselement**
Box body with a connecting element with two connecting halves
Structure de coffre dotée d'un élément de liaison comprenant deux moitiés de liaison

(43) Veröffentlichungstag der Anmeldung: 11.11.2009
(73) Patentinhaber: Schmitz Cargobull AG, 48341 Altenberge (DE)
(72) Erfinder: Dipl.-Ing. Reinhard Beelmann, 45721 Haltern am See (DE); Dipl.-Ing. Manfred Gerling, 48683 Ahaus (DE)
(74) Vertreter: Cohausz & Florack

(56) Entgegenhaltungen:
- DE-A1- 4 334 269
- DE-A1-102006 030 922
- GB-A- 2 336 137
- US-A- 5 588 693

## Beschreibung

Die Erfindung betrifft einen Kofferaufbau eines Lastkraftwagens, Aufliegers und/oder Anhängers, mit einem Seitenwandpaneel sowie einem Dachpaneel und/oder einem Bodenpaneel, wobei das Seitenwandpaneel über ein Verbindungselement mit einem Dachpaneel und/oder einem Bodenpaneel verbunden ist und wobei das Verbindungselement eine dem Seitenwandpaneel zugeordnete Verbindungshälfte und eine dem Dachpaneel und/oder dem Bodenpaneel zugeordnete Verbindungshälfte aufweist.

Bei den bekannten Kofferaufbauten der vorgenannten Art handelt es sich im Wesentlichen um Kofferaufbauten mit einen Eckverstärker aufweisenden Rückwandrahmen, wobei die Eckverstärker jeweils aus zwei Eckverstärkerhälften zusammengesetzt sind. Durch die Teilung der Eckverstärker in zwei Eckverstärkerhälften wird die Montage des Rückwandrahmens erleichtert. Entsprechend der jeweiligen Teilung der Eckverstärker wird eine Fügerichtung definiert, in der die beiden Eckverstärkerhälften zusammengefügt werden, bis sie an entsprechenden Anschlagflächen aneinanderliegen. In dieser Position erfolgt dann eine Verschraubung der beiden Eckverstärkerhälften.

Ein Kofferaufbau der eingangs genannten Art ist beispielsweise aus der EP 09 78 443 A2 bekannt. Dieser Kofferaufbau verfügt über einen Rückwandrahmen, dessen Eckbereiche unter Verwendung jeweils eines Eckverstärkers zusammengefügt sind. Jeder Eckverstärker ist dabei aus zwei separaten jeweils einen Schenkel des Eckverstärkers bildenden Eckverstärkerhälften zusammengesetzt. Die beiden Eckverstärkerhälften weisen horizontal ausgerichtete Anschlagflächen auf und sind über eine vertikale Verschraubung miteinander verbunden.

Die Seitenwandpaneele, das Dachpaneel und das Bodenpaneel des bekannten Kofferaufbaus können bereits entsprechende Teile des Rückwandrahmens mit umfassen. Beim Zusammensetzen der einzelnen Paneele zum Kofferaufbau wird gleichzeitig der Rückwandrahmen aus den einzelnen den unterschiedlichen Paneelen zugeordneten Rückwandrahmenteilen gebildet, so dass zusätzliche Montageschritte eingespart werden können.

Ein weiterer ähnlicher Kofferaufbau ist in DE 4 334 269 A beschrieber, die auch den beschreibenden Teil des Anspruchs 1 zeigt.

Die Montage der bekannten Kofferaufbauten ist trotz der Teilung des Verbindungselements in zwei Verbindungshälften mit einem erheblichen Arbeitsaufwand verbunden, der sich unter anderem aus den großen Abmessungen der Paneele des Kofferaufbaus und den geringen Toleranzen, die beim Zusammenbau des Kofferaufbaus eingehalten werden müssen, ergibt. Es besteht daher weiter ein Interesse an einer einfacheren, schnelleren und kostengünstigeren Montage des Kofferaufbaus.

Daher liegt der vorliegenden Erfindung die Aufgabe zu Grunde, einen Kofferaufbau derart auszugestalten und weiterzubilden, dass er einfacher, schneller und kostengünstiger zusammengebaut werden kann.

Diese Aufgabe ist bei einem Kofferaufbau gemäß des Oberbegriffs des Anspruchs 1 dadurch gelöst, dass die Verbindungshälften einen Formschluss in einer horizontalen Richtung parallel zur Längserstreckung des Kofferaufbaus bilden.

Die Erfindung hat erkannt, dass der Zusammenbau des Kofferaufbaus erheblich erleichtert werden kann, wenn die beiden Verbindungshälften formschlüssig ineinander greifen, so dass beim Fügen gleichzeitig eine exakte Positionierung der Verbindungshälften jedenfalls in Längserstreckung des Kofferaufbaus zueinander möglich ist. Zudem wird diese Position aufgrund des Formschlusses aber auch bei nachfolgenden Montageschritten beibehalten, bis schließlich die beiden über das Verbindungselement verbundenen Paneele fest und dauerhaft miteinander verbunden sind, wonach ein unbeabsichtigtes Verschieben der Verbindungshälften gegeneinander auch in anderen Raumrichtungen unterbunden wird.

Es hat sich überraschend gezeigt, dass sich die Verwendung von einen Formschluss in Längserstreckung des Kofferaufbaus bildenden Verbindungshälften positiv auf den Montageaufwand auswirkt, denn das formschlüssige Fügen der Verbindungshälften ist zunächst mit einem erhöhten Aufwand verbunden, da das Fügen gleich sehr exakt durchgeführt werden muss. Es ist ein nachträgliches Verschieben der Verbindungshälften gegeneinander nicht mehr oder nur sehr eingeschränkt möglich. Dies führt allerdings wiederum dazu, dass nachfolgende Montageschritte, wie beispielsweise das Verschrauben der Verbindungshälften miteinander, einfacher erfolgen können, da ein Verschieben der Verbindungshälften in Längserstreckung des Kofferaufbaus jedenfalls zum Großteil verhindert wird. Letztlich wird das exakte Positionieren und das Aneinanderlegen der Verbindungshälften in einem Arbeitsschritt zusammengefasst, was also zur Einsparung eines Arbeitsschritts führt, auch wenn der genannte Arbeitsschritt etwas aufwändiger gestaltet ist.

Ein weiterer erfindungsgemäßer Vorteil besteht darin, dass durch die entsprechende Ausgestaltung der Verbindungselemente beim fertig montierten Kofferaufbau Kräfte parallel zur Längserstreckung des Kofferaufbaus jedenfalls teilweise von der formschlüssigen Verbindung zwischen den einzelnen Verbindungshälften des Verbindungselements bzw. der verwendeten Verbindungselemente aufgenommen werden können.

Bei einer ersten Ausgestaltung des Kofferaufbaus kann eine weitere Vereinfachung der Montage durch Verbindungshälften, die zu einer Selbstzentrierung der Verbindungshälften parallel zur Längserstreckung des Kofferaufbaus führen, erreicht werden. Dadurch wird die exakte Positionierung und damit die Etablierung des Formschlusses deutlich erleichtert. Das Fügen der Verbindungshälften kann letztlich schneller erfolgen.

Bei einer konstruktiv besonders einfachen Ausführungsform der Verbindungshälften weisen die Verbindungshälften korrespondierende Nut-/Feder-Profile auf. Dies ist eine einfache und kostengünstige Weise einen Formschluss herzustellen, wobei der Formschluss in Richtung der Längsersteckung des Kofferaufbaus sowohl nach vorne als auch nach hinten wirkt.

Der Formschluss, beispielsweise durch Ineinanderstecken der Nut-/Feder-Profile, kann dabei prinzipiell in unterschiedlichen Fügerichtungen etabliert werden. Die Fügerichtung ist dabei vorzugsweise horizontal oder vertikal ausgerichtet und senkrecht zur Längserstreckung angeordnet. Alternativ kann die Fügerichtung aber auch eine resultierende Fügerichtung aus einer Überlagerung einer solchen horizontalen und vertikalen Fügerichtung sein. Bei einer besonders bevorzugten Ausgestaltung des Kofferaufbaus kann der Formschluss der Verbindungshälften wahlweise in der horizontalen Fügerichtung, der vertikalen Fügerichtung oder der resultierenden Fügerichtung hergestellt werden. Dadurch wird eine hohe Flexibilität des Verbindens erreicht und es muss nicht eine Fügerichtung ganz exakt eingehalten werden, jedenfalls nicht senkrecht zur Längserstreckung des Kofferaufbaus. Dann passen die Verbindungshälften in jedem Falle aneinander. Dabei können die Verbindungshälften je nach der jeweiligen Fügerichtung an unterschiedlichen Abschnitten des Verbindungsbereichs des Verbindungselements zuerst in Eingriff miteinander kommen. Im Falle von Nut-/Feder-Profilen erfolgt dann vorzugsweise gleichzeitig eine Selbstzentrierung.

In diesem Zusammenhang bietet es sich alternativ oder zusätzlich an, wenn die Verbindungshälften entweder in der ersten vertikalen Fügerichtung und in der zweiten horizontalen Fügerichtung und/oder in der aus der Überlagerung der ersten Fügerichtung sowie der zweiten Fügerichtung resultierenden Fügerichtung fügbar ausgebildet sind, wobei die Verbindungshälften dann wenigstens zwei korrespondierende Anschlagflächen zur Positionierung der Verbindungshälften relativ zueinander in der ersten Fügerichtung und der zweiten Fügerichtung aufweisen.

Verbindungshälften mit zwei korrespondierenden, in unterschiedlichen Ebenen liegenden Anschlagflächen erleichtern die Montage des Kofferaufbaus weiter, obwohl die korrespondierenden Konturen der beiden Verbindungshälften im Bereich der Anschlagflächen entsprechend komplizierter ausgestaltet werden müssen, um die beiden in unterschiedlichen Ebenen liegenden Anschlagflächen bereitzustellen. Letztlich muss beim Zusammenbau des erfindungsgemäßen Kofferaufbaus kein besonderer Aufwand dahingehend getrieben werden, dass die Fügerichtungen genau eingehalten werden, um ein exaktes Aneinanderpassen der beiden Verbindungshälften in einer Richtung senkrecht zur Längsertreckung der Kofferaufbaus sicherzustellen, ohne dass eine nachträgliche Justierung der Verbindungshälften gegeneinander erforderlich wäre. Dies führt letztlich nicht nur zu einem Zeitgewinn beim Zusammenbau des erfindungsgemäßen Kofferaufbaus, sondern auch zu einer Vereinfachung der für das positionsgenaue zusammenfügen der Verbindungshälften erforderlichen Vorrichtungen.

Sofern es zu Abweichungen in der vorgesehenen Fügerichtung senkrecht zur Längserstreckung des Kofferaufbaus kommt, können die beiden Verbindungshälften trotzdem positionsgenau gefügt werden, da die beiden Anschlagflächen der Verbindungshälften auch dann nach dem Fügen exakt aneinander anliegen. Ein weiterer Vorteil dieser Ausgestaltung liegt darin, dass die Fügerichtungen an die Gegebenheiten des Einzelfalls angepasst werden können, ohne dass andere Verbindungselemente verwendet oder nachfolgende Justierungsschritte vorgesehen werden müssen. Dies bedeutet letztlich auch, dass bei Verwendung von einheitlichen Verbindungselementen, beispielsweise in allen Ecken des Kofferaufbaus, einzelne Paneele des Kofferaufbaus in einer ersten Fügerichtung und andere Paneele des Kofferaufbaus in einer zweiten Fügerichtung verbunden werden können, ohne dass es hierbei zu Fertigungsproblemen kommt. Selbst drei oder mehr unterschiedliche Fügerichtungen sind bei einem Kofferaufbau mit einheitlichen Verbindungselementen möglich, wenn hieran Bedarf besteht.

Nicht zuletzt können bei dieser Ausgestaltung die Verbindungshälften ohne weiteres in drei zueinander unabhängigen Raumrichtungen relativ zueinander positioniert werden. Dabei ist eine Raumrichtung vorzugsweise parallel zur Längserstreckung des Kofferaufbaus.

In diesem Zusammenhang weisen die wenigstens zwei Anschlagflächen jeweils einen ersten Abschnitt senkrecht zur zweiten Fügerichtung und einen zweiten Abschnitt senkrecht zur ersten Fügerichtung auf. In diesem Falle legen der erste Abschnitt und der zweite Abschnitt der wenigstens zwei Anschlagflächen die Lage der Verbindungshälften relativ zueinander und unabhängig voneinander in beiden Fügerichtungen fest. Es kommt dabei in keiner der beiden Fügerichtungen zu einem unbeabsichtigten seitlichen Verschieben der Verbindungshälften gegeneinander in einer Richtung parallel zu dem entsprechenden Abschnitt der Anschlagflächen. In diesem Zusammenhang sind der erste Abschnitt und der zweite Abschnitt der wenigstens zwei Anschlagflächen senkrecht zueinander ausgerichtet.

Alternativ oder zusätzlich kann die Fixierung der Verbindungshälften durch zwei in einer durch die erste Fügerichtung und die zweite Fügerichtung aufgespannten Ebene angeordnete Schrauben verbunden sein. Wenn beide Schrauben in einer nicht parallelen Ausrichtung zueinander vorgesehen sind, kann jede der beiden Schrauben durch Aufnahme von Zugkräften die jeweils andere Schraube in Bezug auf die Scherkräfte entlasten. Gleichzeitig erfährt der Kofferaufbau eine Stabilisierung gegenüber im Betrieb des Kofferaufbaus auftretenden Verschränkungskräften.

In diesem Zusammenhang ist es besonders bevorzugt, wenn eine erste Schraube sich parallel zur ersten Fügerichtung und eine zweite Schraube sich parallel zur zweiten Fügerichtung erstreckt. Jede dieser Schrauben kann dann in der entsprechenden Fügerichtung Zugkräfte aufnehmen und das Auftreten von übermäßigen Scherkräften an der jeweils anderen Schraube verhindern. Bei einer weiter bevorzugten Ausgestaltung sind die Fügerichtungen und damit die Schrauben senkrecht zueinander angeordnet. In der durch die Fügerichtungen aufgespannten Ebene wirkt dann jeweils eine von zwei normal zueinanderstehenden Komponenten der durch die Verschränkung des Kofferaufbaus hervorgerufenen Kräfte als Zugkraft auf eine der beiden Schrauben. In diesem Zusammenhang sind die Fügerichtungen vorzugsweise beide senkrecht zur Längserstreckung des Kofferaufbaus angeordnet, da in dieser Ebene durch die Verschränkung des Kofferaufbaus besonders hohe Kräfte auf das Verbindungselement wirken.

Damit die Anschlagflächen der beiden Verbindungshälften dauerhaft aneinander anliegen und auch im Falle einer extremen Verschränkung des Kofferaufbaus nicht voneinander beabstandet werden, bietet es sich an, die ersten Abschnitte der Anschlagflächen durch die zweite Schraube und die zweiten Abschnitte der Anschlagflächen durch die erste Schraube kraftschlüssig miteinander zu verbinden. In diesem Zusammenhang sind die Schrauben vorzugsweise senkrecht zu den jeweiligen Anschlagflächen ausgerichtet. Ungünstige Kippmomente in Bezug auf die beiden Verbindungshälften können dadurch minimiert werden, dass die beiden Schrauben die Abschnitte der Anschlagflächen im Wesentlichen durchdringen oder jedenfalls in einer Richtung mittig zu dem jeweiligen Abschnitt angeordnet sind. Dies erlaubt zudem eine platzsparende Ausgestaltung der Verbindungselemente.

Bei einer weiter bevorzugten Ausgestaltung des Kofferaufbaus sind die Anschlagflächen in Bezug auf die durch die erste Fügerichtung und die zweite Fügerichtung aufgespannte Ebene gebogen ausgebildet. Eckbereiche, in denen Spannungsspitzen auftreten können, werden auf diese Weise vermieden. Darüber hinaus steht in diesem Falle jede erdenkliche Fügerichtung, die innerhalb von der ersten und der zweiten Fügerichtung aufgespannten Ebene liegt, im Wesentlichen senkrecht auf einem bestimmten Abschnitt der korrespondierenden Anschlagflächen. So können in jeder dieser Richtungen Normalkräfte übertragen werden.

Um möglichst langgestreckte Anschlagflächen zu erhalten, kann die eine Verbindungshälfte sich bis zur Rückseite der anderen Verbindungshälfte erstrecken. Dann liegt eine der beiden Verbindungshälften auf der jeweils anderen Verbindungshälfte über die gesamte in der durch die Fügerichtungen aufgespannten Ebene liegenden Breite auf.

Zum Abdichten der Verbindung zwischen dem Seitenwandpaneel einerseits und dem Dachpaneel und/oder dem Bodenpaneel andererseits, kann zwischen den Anschlagflächen eine Dichtmasse und/oder ein Dichtelement vorgesehen sein. Es versteht sich in diesem Zusammenhang, dass die Anschlagflächen im Sinne der Erfindung auch dann als solche angesehen werden, wenn diese durch ein dazwischen befindliches Dichtelement bzw. eine dazwischen befindliche Dichtmasse voneinander beabstandet sind.

Im Falle der Verwendung einer Dichtmasse und/oder eines Dichtelements, kann es zweckmäßig sein, wenn wenigstens eine Verbindungshälfte eine Hinterschneidung zur Aufnahme von überschüssiger Dichtmasse und/oder des überschüssigen Teils des Dichtelements aufweist. Bei Verwendung eines Dichtelements kann dieses auch derart in der Hinterschneidung aufgenommen sein, dass das Dichtelement dort unabhängig von einer Verbindung der beiden Verbindungshälften in der gewünschten Position gehalten wird.

Das aus zwei verbindungshälften zusammengesetzte Verbindungselement kann grundsätzlich an jeder Stelle zwischen einem Seitenwandpaneel sowie einem Dachpaneel und/oder einem Bodenpaneel vorgesehen sein. Bedarfsweise ist es auch möglich, dass sich das Verbindungselement entlang des gesamten Seitenwandpaneels erstreckt. Unter anderem aus Gewichtsgründen wird das Verbindungselement allerdings vorzugsweise nur an bestimmten Stellen der Verbindung zwischen dem Seitenwandpaneel und dem Dachpaneel und/oder dem Bodenpaneel vorgesehen sein. Insbesondere liegen diese Stellen in den Eckbereichen des Kofferaufbaus. Folglich handelt es sich bei dem Verbindungselement also vorzugsweise um einen sogenannten Eckverstärker. Der Eckverstärker kann dabei im Wesentlichen winkelförmig ausgebildet sein, wobei jede Verbindungshälfte einen Schenkel des Verbindungselements bzw. des Winkels repräsentieren kann. Zudem kann die Längserstreckung eines jeden dieser Schenkel parallel zu einer der beiden Fügerichtungen sein.

Nachfolgend ist die Verbindung anhand lediglich ein Ausführungsbeispiel darstellenden Zeichnung näher erläutert.
Darin zeigt
- Fig. 1: einen Lastkraftwagen mit einem einen erfindungsgemäßen Kofferaufbau aufweisenden Auflieger,
- Fig. 2: ein Detail des oberen Rückwandrahmens des Kofferaufbaus gemäß II aus Fig. 1 in schematischer, freigeschnittener Ansicht,
- Fig. 3: das Detail aus Fig. 2 in einer Explosionsdarstellung,
- Fig. 4: den oberen Teil des Rückwandrahmens aus Fig. 3 in einer perspektivischen Ansicht,
- Fig. 5: ein Detail des unteren Rückwandrahmens des Kofferaufbaus gemäß V aus Fig. 1 in einer schematischen, freigeschnittenen Ansicht,
- Fig. 6: das Detail aus Fig. 5 in einer Explosionsdarstellung und
- Fig. 7: den linken Teil des Details aus Fig. 6 in einer perspektivischen Ansicht.

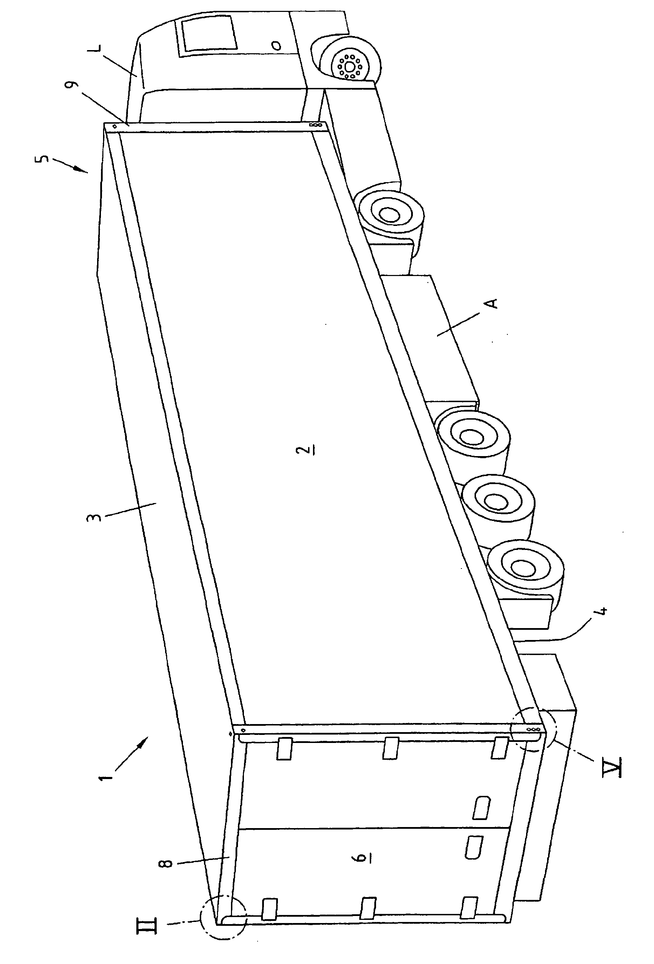

In der Fig. 1 ist ein Lastkraftwagen L mit einem Auflieger A, einem sogenannten Trailer, dargestellt, wobei der Auflieger einen Kofferaufbau 1 trägt. Der Kofferaufbau 1 setzt sich zusammen aus zwei Seitenwandpaneelen 2, einem Dachpaneel 3, einem Bodenpaneel 4, einer Stirnwand 5 und einer Rückwand 6. Dabei ist jedes der beiden Seitenwandpaneele 2 fest sowohl mit dem Dachpaneel 3 als auch mit dem Bodenpaneel 4 verbunden. Die Stabilität des Kofferaufbaus 1 wird dabei im Wesentlichen durch Verbindungselemente 7 in den Ecken der Stirnwand 5 und der Rückwand 6 erreicht. Diese Verbindungselemente 7 werden auch als Eckverstärker bezeichnet. Bei dem dargestellten und insoweit bevorzugten Kofferaufbau 1 sind die Eckverstärker in entsprechenden Profilen des Rückwandrahmens 8 und des Stirnwandrahmens 9 vorgesehen. Der Rückwandrahmen und der Stirnwandrahmen sind aus vier Teilprofilen zusammengesetzt, von denen jeweils eins dem Dachpaneel 3, dem Bodenpaneel 4 und jedem Seitenwandpaneel 2 zugeordnet ist.

Der Kofferaufbau könnte alternativ auch direkt auf einem Lastkraftwagen oder einem nicht auf dem Lastkraftwagen aufliegenden Anhänger montiert sein. Dann würden sich prinzipiell die gleichen Effekte und Vorteile ergeben. Zudem müssen die Seitenwandpaneele, das Dachpaneel und das Bodenpaneel nicht als mehrschichtige oder mehrlagige Paneele ausgebildet sein, obwohl das Einbringen eines geschäumten Kunststoffmaterials zwischen zwei Decklagen zur Isolation und Stabilisierung bei gleichzeitig geringem Gewicht bevorzugt ist. Das Dachpaneel, das Bodenpaneel und/oder die Seitenwandpaneele könnten auch eine andere Struktur aufweisen, z.B. massiv ausgebildet sein.

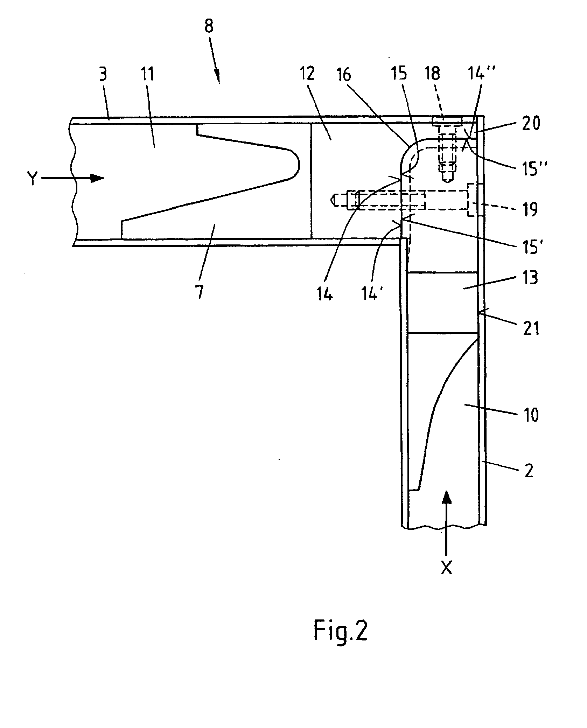

In der Fig. 2 ist der linke obere Eckbereich des Rückwandrahmens 8 aus dem in der Fig. 1 dargestellten Kofferaufbau 1 gezeigt. Von dem Seitenwandpaneel 2 und dem Dachpaneel 3, die in diesem Eckbereich miteinander verbunden sind, sind der besseren Anschaulichkeit halber lediglich die entsprechenden Rückwandrahmenprofile 10,11 und das Verbindungselement 7 dargestellt. Das in der Fig. 2 dargestellte Detail des Rückwandrahmens 8 ist aus einer Blickrichtung aus dem Inneren des Kofferaufbaus 1 dargestellt. Das Seitenwandpaneel 2 und das Dachpaneel 3 sind über ein Verbindungselement in Form eines rechtwinkligen Eckverstärkers 5 miteinander verbunden, wobei das Verbindungselement 7 formschlüssig in den beiden Rückwandrahmenprofilen 10,11 eingebracht ist.

Das Verbindungselement 7 ist aus zwei unterschiedlichen Verbindungshälften 12,13 zusammengesetzt, wobei die erste Verbindungshälfte 12 dem Dachpaneel 3 und die zweite Verbindungshälfte 13 dem Seitenwandpaneel 2 zugeordnet ist. Bei dem dargestellten und insoweit bevorzugten Ausführungsbeispiel ist am freien Ende der ersten Verbindungshälfte 12 eine Schwalbenschwanzstruktur vorgesehen. Dagegen verjüngt sich das freie Ende der zweiten Verbindungshälfte 13 allmählich von der Außenseite in Richtung zur Innenseite des Rückwandrahmenprofils 10. Davon abweichende Ausgestaltungen der freien Enden des als Winkel ausgebildeten Verbindungselements sind ohne weiteres denkbar.

Die beiden Verbindungshälften 12,13 des Verbindungselements 7 liegen an korrespondierenden Anschlagflächen 14,15 aneinander an. Die Anschlagflächen 14,15 sind dabei derart ausgestaltet, dass die beiden Verbindungshälften 12,13 durch die Anschlagflächen 14,15 sowohl in einer ersten Fügerichtung x vertikal in der Ebene des Seitenwandpaneels 2 als auch in einer zweiten Fügerichtung y horizontal in der Ebene des Dachpaneels 3 gegeneinander positioniert sind. Mit anderen Worten liegt die erste Verbindungshälfte 12, die dem Dachpaneel 3 zugeordnet ist, einerseits auf der zweiten, dem Seitenwandpaneel 2 zugeordneten Verbindungshälfte 13 auf und gleichzeitig an dieser an.

Die Anschlagflächen 14,15 der Verbindungshälften 12,13 des Verbindungselements 7 verlaufen in der durch die beiden Fügerichtungen x,y aufgespannten Ebene, die parallel zur Ebene des Rückwandrahmens 8 ausgerichtet ist, bogenförmig. Diese bogenförmige Ausgestaltung der Anschlagflächen 14,15 umfasst für die erste Verbindungshälfte 12 und für die zweite Verbindungshälfte 13 jeweils einen ersten Abschnitt 14',15', der senkrecht zur zweiten Fügerichtung y ausgerichtet ist, und jeweils einen zweiten Abschnitt 14", 15", der senkrecht zur ersten Fügerichtung x ausgerichtet ist. Die Ausrichtung der Abschnitte 14',14 ",15',15 " der Anschlagflächen 14,15 ist dabei bezogen auf eine durch die beiden Fügerichtungen x,y aufgespannte Ebene.

Im dargestellten und insoweit bevorzugten Ausführungsbeispiel sind die Abschnitte 14',14 ",15',15 " der Anschlagflächen 14,15 ebenso wie die Fügerichtungen x,y senkrecht zueinander ausgerichtet, wobei die erste Fügerichtung x vertikal in einer Ebene des Seitenwandpaneels 2 und die zweite Fügerichtung y horizontal in einer Ebene des Dachpaneels 3 verläuft. Zudem befindet sich jeweils zwischen den beiden Abschnitten 14',14",15',15 " der Anschlagflächen 14,15 eine im Wesentlichen einem Viertelkreis entsprechende Anschlagflächenkontur 16.

Die beiden Verbindungshälften 12,13 des Verbindungselements 7 und damit letztlich das Seitenwandpaneel 2 und das Dachpaneel 3 werden über zwei Schrauben 18,19 miteinander verbunden, die parallel zu einer durch die Fügerichtungen x,y aufgespannten Ebene angeordnet sind. Bei dem dargestellten und insoweit bevorzugten Ausführungsbeispiel erstreckt sich die erste Schraube 18 parallel zur ersten Fügerichtung x und erstreckt sich die zweite Schraube 19 parallel zur zweiten Fügerichtung y. Dabei ist die zweite Schraube 19 im Bereich der ersten Abschnitte 14' ,15' der Anschlagflächen 14,15 vorgesehen, während die erste Schraube 18 im Bereich der zweiten Abschnitte 14'',15'' der Anschlagflächen 14,15 vorgesehen ist. Durch die entsprechenden Schraubenkräfte werden die ersten Abschnitte 14', 15' und die zweiten Abschnitte 14'',15'' der korrespondierenden Anschlagflächen 14,15 kraftschlüssig aneinander gehalten.

Durch die gebogene Ausgestaltung der korrespondierenden Anschlagflächen 14,15 der miteinander verbundenen Verbindungshälften 12,13 weist die erste, dem Dachpaneel 3 zugeordnete Verbindungshälfte 12 an ihrer Oberseite einen Vorsprung 20 auf, der bis zur Rückseite 21 der zweiten Verbindungshälfte 13 reicht, wobei die Rückseite 21 der zweiten Verbindungshälfte 13 in Richtung der Außenseite des Seitenwandpaneels 2 weist.

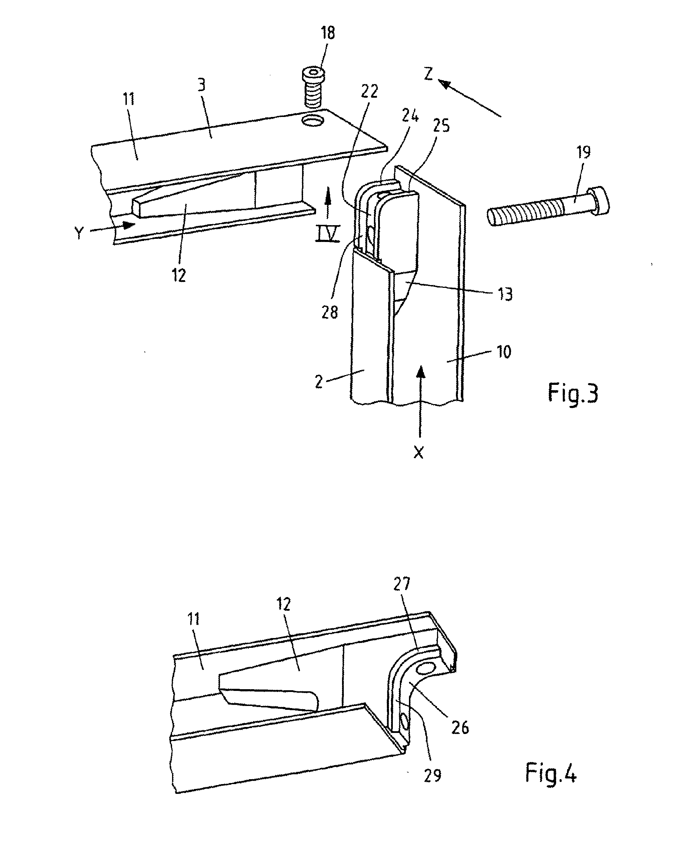

Wie insbesondere in der Explosionsdarstellung des Eckbereichs der Fig. 2 und Fig. 3 und der perspektivischen Ansicht von dem oberen Rückwandrahmenprofil 11 zusammen mit der ersten Verbindungshälfte 12 in Fig. 4 dargestellt ist, sind in einer Richtung senkrecht zu den beiden Fügerichtungen x,y die beiden Verbindungshälften 12,13 des Verbindungselements 7 formschlüssig miteinander verbunden. Zum Etablieren dieses Formschlusses weist die dem Seitenwandpaneel 2 zugeordnete Verbindungshälfte 13 ein Nutprofil 22 auf, das sich entlang des gesamten Verbindungsbereichs zwischen den beiden Verbindungshälften 12,13 erstreckt.

Das Nutprofil 22 verläuft dabei mittig und parallel zu der Anschlagfläche 15 der dem Seitenwandpaneel 2 zugeordneten Verbindungshälfte 13. Diese Anschlagfläche 15 wird dabei in einer Ebene parallel zu der durch die beiden Fügerichtungen x,y aufgespannten Ebene in zwei Teilanschlagflächen 24,25 unterteilt, die sich auf gegenüberliegenden Seiten des Nutprofils 22 befinden. Nicht im Einzelnen dargestellt ist, dass auf den Teilanschlagflächen 24, 25 des Nutprofils 22 eine Dichtmasse oder ein Dichtelement vorgesehen sein kann. Gegen diese Dichtmasse oder dieses Dichtelement aus einem geeigneten Dichtmaterial kommt die korrespondierende Verbindungshälfte 12 im verbundenen Zustand zur Anlage.

Korrespondierend zu dem Nutprofil 22 der dem Seitenwandpaneel 2 zugeordneten Verbindungshälfte 13, weist die dem Dachpaneel 3 zugeordnete Verbindungshälfte 12 ein Federprofil 26 auf. Dieses Federprofil 26 erstreckt sich ebenfalls entlang des gesamten Verbindungsbereichs zwischen den beiden Verbindungshälften 12,13 und teilt damit ebenfalls die Anschlagfläche 14 der dem Dachpaneel 3 zugeordneten Verbindungshälfte 12 in zwei Teilanschlagsflächen 27, die sich auf gegenüberliegenden Seiten des Federprofils 26 befinden. Nicht im Einzelnen dargestellt ist, dass auf den Teilanschlagflächen 27 des Federprofils 26 eine Dichtmasse oder ein Dichtelement vorgesehen sein kann. Gegen diese Dichtmasse oder dieses Dichtelement aus einem geeigneten Dichtmaterial kommt die korrespondierende Verbindungshälfte 13 im verbundenen Zustand zur Anlage.

Die Flanken 28,29 des Federprofils 26 und des Nutprofils 22 sind gegenüber der durch die beiden Fügerichtungen x,y aufgespannten Ebene abgeschrägt. Aufgrund dieser abgeschrägten Flanken 28,29 ermöglichen die beiden Verbindungshälften 12,13 eine selbstzentrierende Verbindung, da die Flanken 28,29 der Nut-/Feder-Profile so lange aneinander abgleiten, bis die beiden Verbindungshälften 12,13 in einer Richtung z senkrecht zu der durch die beiden Fügerichtungen x,y aufgespannten Ebene zentriert aneinanderliegen.

Bei dem dargestellten und insoweit bevorzugten Ausführungsbeispiel verlaufen die Schrauben 18,19 durch die Bereiche der Verbindungshälften 12,13, in denen die Abschnitte der Anschlagflächen 14',14'',15',15' senkrecht zu einer der beiden Fügerichtungen x, y ausgerichtet sind. Zudem verlaufen die beiden Schrauben 18,19 zum Verbinden der beiden Verbindungshälften 12,13 des Verbindungselements 7 in der Ebene der Nut-/Feder-Profile 22,26 der Verbindungshälften 12,13. Dabei beruht ein Vorteil darin, dass in einer Richtung parallel zur Längserstreckung des Kofferaufbaus 1 zu beiden Seiten der vorzugsweise beiden Schrauben 18,19 ein Teil der Anschlagfläche vorgesehen ist. Das erhöht die Stabilität und vermindert die Gefahr eines übermäßigen Kippmoments.

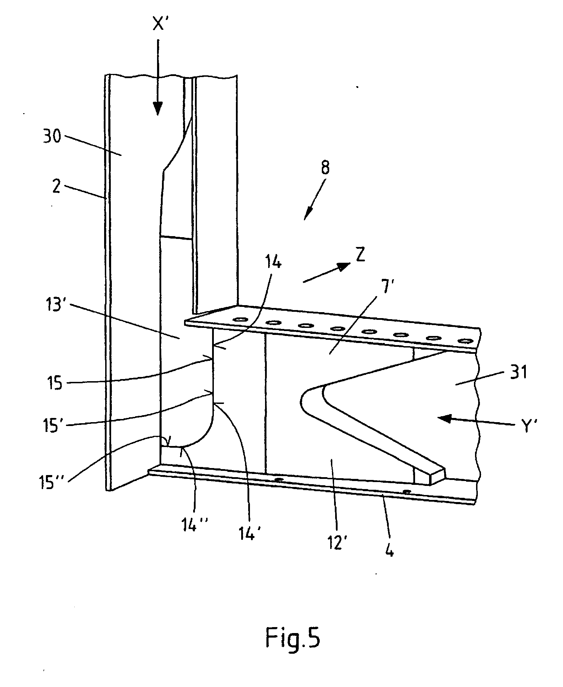

In der Fig. 5 ist ein rechter unterer Eckbereich des Rückwandrahmens 8 in einem Detail dargestellt. Auch diese Darstellung ist schematisch und berücksichtigt von dem Seitenwandpaneel 2 und dem Bodenpaneel 4, die im dargestellten Detail miteinander verbunden sind, lediglich die Rückwandrahmenprofile 30,31 zusammen mit dem Eckverstärker. Dementsprechend ist die Eckverbindung gesehen aus dem Inneren des Kofferaufbaus 1 dargestellt. Bei dem dargestellten und insoweit bevorzugten Ausführungsbeispiel entsprechen sich die dem Dachpaneel 2 zugeordnete Verbindungshälfte 12 aus Fig. 2 und die dem Bodenpaneel 4 zugeordnete Verbindungshälfte 12' aus Fig. 5. Gleiches gilt für die dem Seitenwandpaneel 2 zugeordnete Verbindungshälfte 13 aus Fig. 2 und der dem Seitenwandpaneel 2 zugeordnete Verbindungshälfte 13' aus Fig. 5. Auch hier liegen die beiden Fügerichtungen x',y' wiederum in Ebenen der beiden miteinander verbundenen Paneele 2,4. Der besseren Übersichtlichkeit halber, sind in dem in der Fig. 5 dargestellten Bereich des Rückwandrahmens 8 keine Schraubverbindungen eingezeichnet.

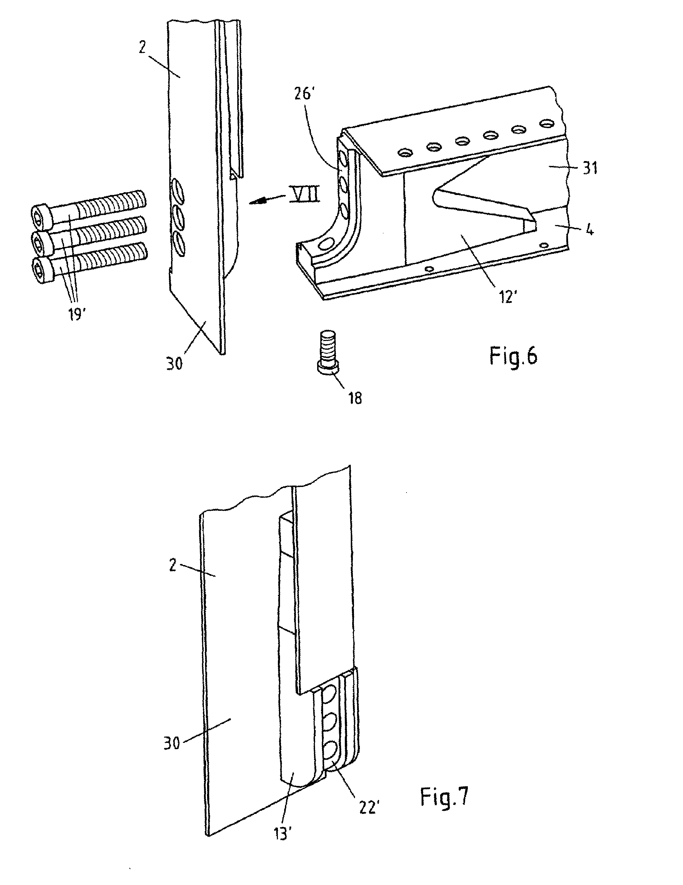

Entsprechende Schraubverbindungen sind jedoch vorhanden, wie in der Explosionsdarstellung der Eckverbindung aus Fig. 5 in Fig. 6 dargestellt ist. Im Unterschied zu dem in der Fig. 2 dargestellten oberen Eckverstärker, zu dessen Verbindung lediglich zwei Schrauben 18,19 vorgesehen sind, ist der das Seitenwandpaneel 2 und das Bodenpaneel 4 verbindende Eckverstärker über insgesamt vier Schrauben 18,19' fixiert. Jedoch sind die verwendeten Schrauben 18,19' in gleicher Weise in Relation zueinander und in Relation zu dem Verbindungsbereich der beiden Verbindungshälften 12,12',13,13' des Verbindungselements 7,7', wie in Fig. 2 dargestellt, ausgerichtet. Der wesentliche Unterschied zwischen den beiden in den Fig. 2 und 5 dargestellten Eckverstärkern ist, dass an Stelle der zweiten Schraube 19 parallel zur zweiten Fügerichtung y, wie in Fig. 2 dargestellt, bei der in der Fig. 5 dargestellten unteren Eckverbindung drei parallel zueinander angeordnete zweite Schrauben 19' vorgesehen sind. Dies ist insbesondere deshalb notwendig, da im oberen Bereich des Rückwandrahmens 8 vorwiegend Verschränkungskräfte und im unteren Bereich des Rückwandrahmens 8 zusätzlich Gewichtskräfte berücksichtigt werden müssen.

Wie insbesondere in der Fig. 6 und der eine perspektivische Ansicht von dem seitlichen Rückwandrahmenprofil 30 zusammen mit der zugehörigen Verbindungshälfte 13' darstellenden Fig. 7 dargestellt ist, verfügen auch die beiden korrespondierenden Verbindungshälften 12',13' des Verbindungselements 7' zur Verbindung des Seitenwandpaneels 2 und des Bodenpaneels 4 über korrespondierende Nut-/Feder-Profile 22',26'. Auch diese Profilgeometrie ist bei dem in der Fig. 5 dargestellten Eckverstärker im Wesentlichen identisch zu den Nut-/Feder-Profilen 22,26 des in der Fig. 2 dargestellten Eckverstärkers.

Nicht im Einzelnen dargestellt ist, dass bei dem dargestellten und insoweit bevorzugten Ausführungsbeispiel auch jeweils ein Eckverstärker der zuvor beschriebenen Art in jeder Ecke des Stirnwandrahmens 9 des Kofferaufbaus 1 vorgesehen ist. Die Ausgestaltung der Eckverstärker im Stirnwandrahmen 9 entspricht im Wesentlichen der Ausgestaltung der zuvor beschriebenen Eckverstärker.

Die Verwendung des dargestellten und insoweit bevorzugten Eckverstärkers in allen vier Ecken sowohl des Rückwandrahmens 8 als auch des Stirnwandrahmens 9 erlaubt einen besonders einfachen Zusammenbau der einzelnen Paneele des Kofferaufbaus 1. Dabei werden zunächst die Seitenwandpaneele 2 in einer im Wesentlichen horizontalen oder jedenfalls überwiegend horizontalen Ausrichtung an das im Wesentlichen horizontale Bodenpaneel 4 von der Seite herangeführt, bis sich die Kanten der Paneele, bedarfsweise die Eckverstärkerhälften der Paneele, berühren. Anschließend werden die Seitenwandpaneele 2 aufgerichtet. Wenn die Seitenwandpaneele 2 ihre senkrechte Position eingenommen haben, liegen die Anschlagflächen der Eckverstärkerhälften der beiden unteren Eckverstärker aneinander an und werden die Eckverstärkerhälften miteinander verschraubt. Nachdem auf diese Weise das Bodenpaneel 4 und die beiden Seitenwandpaneele 2 miteinander verbunden sind, werden die oberen Ränder der Seitenwandpaneele 2 geringfügig nach außen gebogen. Dann wird das Dachpaneel 3 von oben herabgelassen, bis es mit seinen Eckverstärkerhälften auf den oberen Eckverstärkerhälften der Seitenwandpaneele 2 aufliegt. Anschließend werden die oberen Ränder der Seitenwandpaneele 2 in Richtung des Dachpaneels 3 gedrückt oder gezogen, etwa durch das Anziehen der horizontalen, die Eckverstärkerhälften verbindenden Schrauben 18,19.

## Patentansprüche

1. Kofferaufbau (1) eines Lastkraftwagens (L), Aufliegers (A) und/oder Anhängers, mit einem Seitenwandpaneel (2) sowie einem Dachpaneel (3) und/oder einem Bodenpaneel (4), wobei das Seitenwandpaneel (2) über ein Verbindungselement (7,7') mit einem Dachpaneel (3) und/oder einem Bodenpaneel (4) verbunden ist, und wobei das Verbindungselement (7,7') eine dem Seitenwandpaneel (2) zugeordnete Verbindungshälfte (13,13') und eine dem Dachpaneel (3) und/oder dem Bodenpaneel (4) zugeordnete Verbindungshälfte (12,12') aufweist,
**dadurch gekennzeichnet, dass** die Verbindungshälften (12,12',13,13') einen Formschluss in einer horizontalen Richtung (z) parallel zur Längserstreckung des Kofferaufbaus (1) bilden.

2. Kofferaufbau nach Anspruch 1,
**dadurch gekennzeichnet, dass** die Verbindungshälften (12,12',13,13') selbstzentrierend in der Richtung (z) parallel zur Längserstreckung des Kofferaufbaus (1) ausgebildet sind.

3. Kofferaufbau nach Anspruch 1 oder 2,
**dadurch gekennzeichnet, dass** die Verbindungshälften (12,12',13,13') korrespondierende Nut-/Feder-Profile (22,22',26,26') aufweisen.

4. Kofferaufbau nach Anspruch 3,
**dadurch gekennzeichnet, dass** die Nut-/Feder-Profile (22,22',26,26') zum Ineinanderstecken in einer ersten vertikalen Fügerichtung (x,x'), einer zweiten horizontalen Fügerichtung (y,y') und/oder einer aus einer Überlagerung der ersten Fügerichtung (x,x') sowie der zweiten Fügerichtung (y,y') resultierenden Fügerichtung ausgebildet sind, und dass die ersten Fügerichtung (x,x') sowie die zweite Fügerichtung (y,y') senkrecht zur Längserstreckung des Kofferaufbaus ausgerichtet sind.

5. Kofferaufbau nach eine der Ansprüche 1 bis 4,
**dadurch gekennzeichnet, dass** die Verbindungshälften (12,12',13,13') entweder in der ersten vertikalen Fügerichtung (x,x') und der zweiten horizontalen Fügerichtung (y,y') und/oder in der aus der Überlagerung der ersten Fügerichtung (x,x') sowie der zweiten Fügerichtung (y,y') resultierenden Fügerichtung fügbar ausgebildet sind, und dass die Verbindungshälften (12,12',13,13') wenigstens zwei korrespondierende Anschlagflächen (14,15) zur Positionierung der Verbindungshälften (12,12',13,13') relativ zueinander in der ersten Fügerichtung (x,x') und der zweiten Fügerichtung (y,y') aufweisen.

6. Kofferaufbau nach Anspruch 5,
**dadurch gekennzeichnet, dass** die wenigstens zwei Anschlagflächen (14,15) jeweils einen ersten Abschnitt (14',15') senkrecht zur zweiten Fügerichtung (y,y') und einen zweiten Abschnitt (14'', 15'') senkrecht zur ersten Fügerichtung (x,x') aufweisen.

7. Kofferaufbau nach einem der Ansprüche 1 bis 6,
**dadurch gekennzeichnet, dass** die Verbindungshälften (12,12',13,13') durch zwei in einer durch die erste Fügerichtung (x,x') und die zweite Fügerichtung (y,y') aufgespannten Ebene angeordnete Schrauben (18,19,19') verbunden sind.

8. Kofferaufbau nach Anspruch 7,
**dadurch gekennzeichnet, dass** eine erste Schraube (18) sich parallel zur ersten Fügerichtung (x,x') und eine zweite Schraube (19,19') sich parallel zur zweiten Fügerichtung (y,y') erstreckt.

9. Kofferaufbau nach Anspruch 7 oder 8,
**dadurch gekennzeichnet, dass** die ersten Abschnitte (14',15') der Anschlagflächen (14, 15) durch die erste Schraube (18) und die zweiten Abschnitte (14'',15'') der Anschlagflächen (14,15) durch die zweite Schraube (19,19') kraftschlüssig miteinander verbunden sind.

10. Kofferaufbau nach einem der Ansprüche 5 bis 9,
**dadurch gekennzeichnet, dass** die Anschlagflächen (14,15) gebogen in der durch die erste Fügerichtung (x,x') und die zweite Fügerichtung (y,y') aufgespannten Ebene verlaufen.

11. Kofferaufbau nach einem der Ansprüche 1 bis 10,
**dadurch gekennzeichnet, dass** die eine Verbindungshälfte (12,12') sich bis zur Rückseite (21) der anderen Verbindungshälfte (13,13') erstreckt.

12. Kofferaufbau nach einem der Ansprüche 5 bis 11,
**dadurch gekennzeichnet, dass** zwischen den Anschlagflächen (14,15) eine Dichtmasse und/oder ein Dichtelement vorgesehen ist.

13. Kofferaufbau nach Anspruch 12,
**dadurch gekennzeichnet, dass** wenigstens eine Verbindungshälfte (12,12',13,13') eine Hinterschneidung zur Aufnahme von überschüssiger Dichtmasse und/oder überschüssigem Dichtmaterial aufweist.

14. Kofferaufbau nach einem der Ansprüche 1 bis 13,
**dadurch gekennzeichnet, dass** das Verbindungselement (7,7') ein Eckverstärker, vorzugsweise eines Rückwandrahmens (8) und/oder eines Stirnwandrahmens (5), ist.

## Claims

1. Box body (1) of a lorry (L), a semi-trailer (A) and/or trailer, with a side wall panel (2) and a roof panel (3) and/or a floor panel (4), wherein the side wall panel (2) is connected to a roof panel (3) and/or a floor panel (4) via a connecting element (7, 7') and wherein the connecting element (7, 7') has a connection half (13, 13') associated with the side wall panel (2) and a connection half (12, 12') associated with the roof panel (3) and/or the floor panel (4), **characterised in that** the connection halves (12, 12', 13, 13') form a positive fit in a horizontal direction (z) parallel to the longitudinal extent of the box body (1).

2. Box body according to Claim 1, **characterised in that** the connection halves (12, 12', 13, 13') are self-centring in the direction (z) parallel to the longitudinal extent of the box body (1).

3. Box body according to Claim 1 or Claim 2, **characterised in that** the connection halves (12, 12', 13, 13') have corresponding groove and tongue profiles (22, 22', 26, 26').

4. Box body according to Claim 3, **characterised in that** the groove and tongue profiles (22, 22', 26, 26') are designed to insert into each other in a first vertical joining direction (x, x'), in a second horizontal joining direction (y, y') and/or in a joining direction resulting from an overlap of the first joining direction (x, x') and the second joining direction (y, y'), and **in that** the first joining direction (x, x') and the second joining direction (y, y') are formed perpendicular to the longitudinal extent of the body.

5. Box body according to any one of the Claims 1 to 4, **characterised in that** the connection halves (12, 12', 13, 13') are designed to be joinable either in the first vertical joining direction (x, x') and the second horizontal joining direction (y, y') and/or in the joining direction resulting from the overlap of the first joining direction (x, x') and the second joining direction (y, y'), and **in that** the connection halves (12, 12', 13, 13') have at least two corresponding stop faces (14, 15) for positioning the connection halves (12, 12', 13, 13') relative to each other in the first joining direction (x, x') and the second joining direction (y, y').

6. Box body according to Claim 5, **characterised in that** the at least two stop faces (14, 15) respectively have a first section (14',15') perpendicular to the second joining direction (y, y') and a second section (14" ,15") perpendicular to the first joining direction (x, x').

7. Box body according to any one of Claims 1 to 6, **characterised in that** the connection halves (12, 12', 13, 13') are connected by two bolts (18, 19, 19') arranged in a plane spanned by the first joining direction (x, x') and the second joining direction (y, y').

8. Box body according to Claim 7, **characterised in that** a first bolt (18) extends parallel to the first joining direction (x, x') and a second bolt (19, 19') extends parallel to the second joining direction (y, y'),

9. Box body according to Claim 7 or Claim 8, **characterised in that** the first sections (14', 15') of the stop faces (14, 15) are connected to each other in a non-positive manner by the first bolt (18) and the second sections (14", 15") of the stop faces (14, 15) are connected to each other in a non-positive manner by the second bolt (19, 19').

10. Box body according to any one of Claims 5 to 9 **characterised in that** the stop faces (14, 15) run curved in the plane spanned by the first joining direction (x, x') and the second joining direction (y, y').

11. Box body according to any one of Claims 1 to 10 **characterised in that** the one connection half (12, 12') extends to the rear side (21) of the other connection half (13, 13').

12. Box body according to any one of Claims 5 to 11 **characterised in that** a sealing compound and/or a sealing element is provided between the stop faces (14, 15)

13. Box body according to Claim 12 **characterised in that** at least one connection half (12, 12', 13, 13') has an undercut to receive excess sealing compound and/or excess sealing material.

14. Box body according to any one of Claims 1 to 13 **characterised in that** the connecting element (7, 7') is a corner reinforcement, preferably of a rear wall frame (8) and/or of a front wall frame (5).

## Revendications

1. Structure de caisse (1) pour un véhicule utilitaire (L), une semi-remorque (A) et / ou une remorque, lequel est doté d'un panneau latéral (2), ainsi que d'un panneau de toit (3) et / ou d'un panneau de plancher (4), sachant que le panneau latéral (2) est relié à un panneau de toit (3) et / ou à un panneau de plancher (4), par l'intermédiaire d'un élément de liaison (7, 7'), et ledit élément de liaison (7, 7') étant doté d'une moitié de liaison (13, 13'), qui est associée au panneau latéral (2), et d'une moitié de liaison (12, 12'), qui est associée au panneau de toit (3) et / ou au panneau de plancher (4), **caractérisé en ce que** les moitiés de liaison (12, 12', 13, 13') forment une liaison par engagement géométrique, dans une direction horizontale (z), parallèlement au sens de la longueur de la structure de caisse (1).

2. Structure de caisse selon la revendication 1, **caractérisée en ce que** les moitiés de liaison (12, 12', 13, 13') sont conçues à auto-centrage dans la direction (z), parallèlement au sens de la longueur de la structure de caisse (1).

3. Structure de caisse selon revendication 1 ou 2, **caractérisée en ce que** les moitiés de liaison (12, 12', 13, 13') sont dotées de profils languette et rainure (22, 22', 26, 26') correspondants.

4. Structure de caisse selon la revendication 3, **caractérisée en ce que** les profils languette et rainure (22, 22', 26, 26') sont conçus pour s'emboîter les uns dans les autres dans une première direction de liaison verticale (x, x'), dans une deuxième direction de liaison horizontale (y, y') et / ou dans une direction de liaison résultant d'un chevauchement de la première direction de liaison (x, x') et de la deuxième direction de liaison (y, y'), et que la première direction de liaison (x, x') ainsi que la deuxième direction de liaison (y, y') sont orientées perpendiculairement au sens de la longueur de la structure de caisse.

5. Structure de caisse selon l'une des revendications 1 à 4, **caractérisée en ce que** les moitiés de liaison (12, 12', 13, 13') sont conçues de manière à pouvoir être assemblées soit dans la première direction de liaison verticale (x, x') et dans la deuxième direction de liaison horizontale (y, y'), et / ou dans la direction de liaison résultant d'un chevauchement de la première direction de liaison (x, x') et de la deuxième direction de liaison (y, y'), et que les moitiés de liaison (12, 12', 13, 13') sont dotées d'au moins deux surfaces de butée (14, 15) correspondantes, pour le positionnement relatif des moitiés de liaison (12, 12', 13, 13'), dans la première direction de liaison (x, x') et dans la deuxième direction de liaison (y, y').

6. Structure de caisse selon la revendication 5, **caractérisée en ce que** les surfaces de butée (14, 15), prévues au moins au nombre de deux, sont dotées chacune d'une première section (14', 15'), qui est orientée perpendiculairement à la deuxième direction de liaison (y, y'), et d'une deuxième section (14", 15"), qui est orientée perpendiculairement à la première direction de liaison (x, x').

7. Structure de caisse selon l'une des revendications 1 à 6, **caractérisée en ce que** les moitiés de liaison (12, 12', 13, 13') sont reliées par deux vis (18, 19, 19'), qui sont disposées sur un plan, qui est formé par la première direction de liaison (x, x') et la deuxième direction de liaison (y, y').

8. Structure de caisse selon la revendication 7, **caractérisée en ce que** la première vis (18) s'étend parallèlement à la première direction de liaison (x, x') et que la deuxième vis (19, 19') s'étend parallèlement à la deuxième direction de liaison (y, y').

9. Structure de caisse selon revendication 7 ou 8, **caractérisée en ce que** les premières sections (14', 15') des surfaces de butée (14, 15) sont reliées ensembles par adhérence au moyen de la première vis (18) et que les deuxièmes sections (14" , 15") des surfaces de butée (14, 15) sont reliées ensemble par adhérence au moyen de la deuxième vis (19, 19').

10. Structure de caisse selon l'une des revendications 5 à 9, **caractérisée en ce que** les surfaces de butée (14, 15) s'étendent, en courbe, sur le plan, qui est formé par la première direction de liaison (x, x') et la deuxième direction de liaison (y, y').

11. Structure de caisse selon l'une des revendications 1 à 10, **caractérisée en ce que** l'une des moitiés de liaison (12, 12') s'étend jusqu'à la face arrière (21) de l'autre moitié de liaison (13, 13').

12. Structure de caisse selon l'une des revendications 5 à 11, **caractérisée en ce que**, comme élément d'étanchéité, une masse d'étanchéité et / ou un joint d'étanchéité est / sont prévu /s entre les surfaces de butée (14, 15).

13. Structure de caisse selon la revendication 12, **caractérisée en ce qu'**au moins une moitié de liaison (12, 12', 13, 13') est dotée d'une dépouille, qui est destinée à recevoir l'excédent de masse d'étanchéité et / ou l'excédent de matière d'étanchéité.

14. Structure de caisse selon l'une des revendications 1 à 13, **caractérisée en ce que** l'élément de liaison (7, 7') est un renforcement d'angle, de préférence d'un cadre de paroi arrière (8) et / ou d'un cadre de paroi frontale (5).
